# FASCICULE DE BREVET EUROPEEN

(11) **EP 3 262 010 B1**
(45) Date de publication et mention de la délivrance du brevet: **10.04.2019**
(21) Numéro de dépôt: 16707680.1
(22) Date de dépôt: 23.02.2016
(51) Int. Cl.: C04B 35/10, C04B 35/101, C04B 35/653, C04B 35/657

(54) **BLOC REFRACTAIRE ET FOUR DE FUSION DE VERRE**
FEUERFESTER BLOCK UND GLASSCHMELZOFEN
REFRACTORY BLOCK AND GLASS-MELTING FURNACE

(30) Priorité: 24.02.2015 FR 1551582
(43) Date de publication de la demande: 03.01.2018
(73) Titulaire: Saint-Gobain Centre de Recherches et d'Etudes Européen, 92400 Courbevoie (FR); Centre National de la Recherche Scientifique, 75794 Paris Cedex 16 (FR)
(72) Inventeur: GAUBIL, Michel, 30133 Les Angles (FR); BOUVRY, Benjamin, 92400 Courbevoie (FR); CITTI, Olivier, 92400 Courbevoie (FR); LECHEVALIER, David, 92400 Courbevoie (FR)
(74) Mandataire: Nony
(86) Numéro de dépôt international: PCT/EP2016/053784
(87) Numéro de publication internationale: WO 2016/135147

(56) Documents cités:
- EP-A1- 1 288 177
- JP-A- H10 218 676

## Description

### Domaine technique

L'invention concerne un produit réfractaire fondu à forte teneur en alumine, qui convient tout particulièrement à la réalisation de superstructures de fours de verrerie.

### Etat de la technique

Parmi les produits réfractaires, on distingue les produits fondus, bien connus pour la construction des fours de fusion du verre, et les produits frittés.

A la différence des produits frittés, les produits fondus comportent le plus souvent une phase vitreuse intergranulaire reliant des grains cristallisés. Les problèmes posés par les produits frittés et par les produits fondus, et les solutions techniques adoptées pour les résoudre, sont donc généralement différents. Une composition mise au point pour fabriquer un produit fritté n'est donc pas a priori utilisable telle quelle pour fabriquer un produit fondu, et réciproquement.

Les produits fondus, souvent appelés « électrofondus », sont obtenus par fusion d'un mélange de matières premières appropriées dans un four à arc électrique ou par toute autre technique adaptée à ces produits. Le bain de matière en fusion est ensuite coulé dans un moule puis le produit obtenu subit un cycle de refroidissement contrôlé.

Parmi les produits fondus, les produits électrofondus à forte teneur en alumine (Al₂O₃) sont connus depuis plusieurs dizaines d'années. Ils se divisent en deux grandes familles, en fonction de la composition cristallographique : on distingue les produits constitués essentiellement d'alumine β et les produits constitués d'un mélange d'alumine α (ou "corindon") et d'alumine β.

US-A-2043029 décrit des matériaux contenant 1-10% d'oxyde de sodium et essentiellement formé d'alumine β.

JP10-218676 décrit des produits d'alumine β comprenant en pourcentages massiques, 85 à 95% de Al₂O₃, de 4,0 à 7,5% de Na₂O+K₂O, de 0,2 à 2,0% de MgO, de 0,2 à 3,0% de Cao+SrO+BaO, moins de 0,5% de SiO₂ et moins de 0,1% de Fe₂O₃+TiO₂.

EP1288177 décrit des produits à forte teneur en alumine destinés à une utilisation en superstructure de fours de verrerie et constitués d'un mélange d'alumine α et d'alumine β et présentant une porosité comprise entre 7 et 25%.

Dans la pratique, tous les matériaux constitués principalement d'alumine β disponibles dans le commerce, tels que le Monofrax H, le SCIMOS H ou le Jargal H ont, à l'analyse, des compositions très voisines, à savoir de 92 à 94% en poids de Al₂O₃, de 5 à 7% de Na₂O et moins de 0,5% de silice et d'autres oxydes. Tous ces produits sont quasiment dépourvus d'alumine α (moins de 3-4% et typiquement au maximum 2% dans le Jargal H).

Dans la pratique, tous les matériaux d'alumine α/β disponibles dans le commerce, tels que le Monofrax M, le SCIMOS M ou le Jargal M ont, à l'analyse, des compositions très voisines, à savoir de 94 à 95% en poids de Al₂O₃, environ 4% de Na₂O et de 0,5% à 1% de silice et moins de 0,5% d'autres oxydes. Tous ces produits ont une teneur en alumine α de 40 à 45% et en alumine β de 50 à 60%.

Les matériaux d'alumine β ont une résistance importante aux chocs thermiques ainsi qu'aux sollicitations mécaniques à chaud et une conductivité thermique faible. Ces propriétés les rendent bien adaptés à l'utilisation en superstructure (pour former la voûte) dans les fours de fusion du verre (fours de verrerie).

Dans les fours où les matières premières constituant le verre sont fondues grâce à des brûleurs à flamme, il existe un besoin constant d'amélioration de l'efficacité énergétique. La présente invention vise à satisfaire ce besoin.

### Résumé de l'invention

Plus particulièrement, elle concerne un produit réfractaire fondu ayant la composition chimique moyenne suivante, en pourcentages en masse sur la base des oxydes et pour un total de 100% :
Al₂O₃ : complément à 100% ;
Fe₂O₃: 0,6% - 5,0% et/ou TiO₂: 1,5% - 10,0%, pourvu que Fe₂O₃ + TiO₂ ≤ 10,0% ;
Na₂O+K₂O : 1,0% - 8,0% ;
SiO₂ : 0,2% - 2,0% ;
CaO+BaO+SrO : ≤ 0,5% ;
espèces oxydes autres que Al₂O₃, Fe₂O₃, TiO₂, Na₂O, K₂O, SiO₂, CaO, BaO, et
SrO : ≤ 1,5%.

De manière surprenante, les inventeurs ont constaté que cette composition confère au produit un pouvoir émissif amélioré dans les longueurs d'onde correspondant aux températures des flammes des brûleurs. Le produit réfractaire présente ainsi une meilleure restitution de l'énergie des flammes. Avantageusement, il en résulte une efficacité énergétique supérieure.

Un produit selon l'invention peut encore comporter une ou plusieurs des caractéristiques optionnelles suivantes :
- Al₂O₃ ≥ 90%, voire Al₂O₃ ≥ 92% ;
- La teneur en oxyde de fer Fe₂O₃ est supérieure ou égale à 1,0%, voire supérieure ou égale à 1,2 %, voire supérieure ou égale à 1,5%, et/ou inférieure ou égale à 4,5%, voire inférieure ou égale à 4,0 %, voire inférieure ou égale à 3,5%, voire inférieure ou égale à 3,0% ;
- La teneur en oxyde de titane TiO₂ est supérieure ou égale à 1,7%, voire supérieure ou égale à 2,0 %, voire supérieure ou égale à 2,5 %, voire supérieure ou égale à 3,0 %, et/ou inférieure ou égale à 9,0%, voire inférieure ou égale à 8,0 %, voire inférieure ou égale à 7,0% ; voire inférieure ou égale à 6,0 %, voire inférieure ou égale à 5,0% ;
- La teneur en oxyde de titane TiO₂, en présence de plus de 0,6% d'oxyde de fer Fe₂O₃, est supérieure ou égale à 1,0%, voire supérieure ou égale à 1,2 %, voire supérieure ou égale à 1,5 %, voire supérieure ou égale à 2,0 %, et/ou inférieure ou égale à 8,0 %, voire inférieure ou égale à 7,0% ; voire inférieure ou égale à 6,0 %, voire inférieure ou égale à 5,0%, voire inférieure ou égale à 4,0% ;
- La teneur en Fe₂O₃ + TiO₂ est supérieure à 1,0%, voire supérieure ou égale à 1,2 %, voire supérieure ou égale à 1,5%, voire supérieure ou égale à 2,0%, et/ou inférieure ou égale à 9,0%, voire inférieure ou égale à 8,0 %, voire inférieure ou égale à 7,0%, voire inférieure ou égale à 6,0 %, voire inférieure ou égale à 5,0%, voire inférieure ou égale à 4,0% ;
- La teneur en Na₂O + K₂O est supérieure ou égale à 1,5%, voire supérieure ou égale à 2,0%, voire supérieure ou égale à 2,5%, voire supérieure ou égale à 3,0%, voire supérieure ou égale à 3,5% et/ou inférieure ou égale à 7,5%, voire inférieure ou égale à 7,0% ;
- La teneur en SiO₂ est supérieure ou égale à 0,3%, voire supérieure ou égale à 0,5% et/ou inférieure ou égale à 1,5%, voire inférieure ou égale à 1,2%, voire inférieure ou égale à 1,0%, voire inférieure ou égale à 0,9% ;
- Les « autres espèces oxydes » sont des impuretés ;
- La teneur en ZrO₂ est inférieure à 1,0%, de préférence inférieure à 0,8%, de préférence inférieure à 0,5% ;
- Le produit se présente sous la forme d'un bloc présentant de préférence une masse supérieure à 10 kg.

Selon un mode de réalisation, l'invention concerne un produit réfractaire fondu ayant la composition chimique moyenne suivante, en pourcentages en masse sur la base des oxydes et pour un total de 100% :
Al₂O₃ : complément à 100% ;
TiO₂: 2,0% - 5,0% ;
Fe₂O₃ + TiO₂: ≤ 6,0% ;
Na₂O+K₂O : 1,0% - 8,0% ;
SiO₂ : 0,3% - 1,5% ;
CaO+BaO+SrO : ≤ 0,5% ;
espèces oxydes autres que Al₂O₃, Fe₂O₃, TiO₂, Na₂O, K₂O, SiO₂, CaO, BaO, et SrO : ≤ 1,5%.

Selon un autre mode de réalisation, l'invention concerne un produit réfractaire fondu ayant la composition chimique moyenne suivante, en pourcentages en masse sur la base des oxydes et pour un total de 100% :
Al₂O₃ : complément à 100% ;
Fe₂O₃: 1,0% - 3,0% et TiO₂: 1,0% - 4,0% ;
Fe₂O₃ + TiO₂: ≤ 6,0% ;
Na₂O+K₂O : 1,0% - 8,0% ;
SiO₂ : 0,3% - 1,5% ;
CaO+BaO+SrO : ≤ 0,5% ;
espèces oxydes autres que Al₂O₃, Fe₂O₃, TiO₂, Na₂O, K₂O, SiO₂, CaO, BaO, et SrO : ≤ 1,5%.

L'invention concerne aussi un procédé de fabrication d'un produit réfractaire selon l'invention, comprenant les étapes successives suivantes :
a) mélange de matières premières, de manière à former une charge de départ,
b) fusion de ladite charge de départ jusqu'à obtention d'un bain de matière en fusion,
c) coulage et solidification de ladite matière en fusion, par refroidissement contrôlé, de manière à obtenir un produit réfractaire fondu,
ce procédé étant remarquable en ce que lesdites matières premières sont choisies de manière que ledit produit réfractaire fondu présente une composition conforme à celle d'un produit selon l'invention.

L'invention concerne enfin un four de fusion de verre comportant un produit selon l'invention, notamment un produit fabriqué ou susceptible d'avoir été fabriqué par un procédé selon l'invention, en particulier en superstructure (voûte) du four.

### Définitions

De manière générale, on appelle « produit fondu », « produit fondu et coulé » ou « obtenu par fusion » un produit solide, éventuellement recuit, obtenu par solidification complète, par refroidissement, d'un bain de matière en fusion. Un « bain de matière en fusion » est une masse qui, pour conserver sa forme, doit être contenue dans un récipient. Un bain de matière en fusion, apparemment liquide, peut contenir des parties solides, mais en quantité insuffisante pour qu'elles puissent structurer ladite masse.

Un produit selon l'invention peut contenir de l'oxyde d'hafnium, HfO₂, naturellement présent dans les sources de zircone. Sa teneur massique dans le produit selon l'invention est inférieure ou égale à 5%, généralement inférieure ou égale à 2%. Par « ZrO₂ », on désigne classiquement la zircone et ces traces d'oxyde d'hafnium. HfO₂ n'est donc pas compris dans les "autres espèces oxydes".

Par « impuretés », on entend les constituants inévitables, introduits nécessairement avec les matières premières ou résultant de réactions avec ces constituants.

Sauf mention contraire, tous les pourcentages de la présente description sont des pourcentages massiques sur la base des oxydes.

### Description détaillée

Dans un produit fondu et coulé selon l'invention, la présence de fer, exprimé sous la forme Fe₂O₃, et/ou d'oxyde de titane, exprimé sous la forme TiO₂, dans des teneurs selon l'invention, permet, en combinaison avec les autres constituants, d'obtenir un produit réfractaire particulièrement bien adapté pour être utilisé en voûte de four de fusion du verre. Toutefois, à des teneurs trop importantes, la présence de ces oxydes peut être néfaste pour les propriétés mécaniques à chaud (notamment le fluage) des produits. Leur teneur doit donc être limitée.

La présence des oxydes alcalins Na₂O et K₂O permet d'assurer la faisabilité, notamment de produits sous la forme de blocs de grandes dimensions.

Dans un mode de réalisation, les espèces oxydes autres que Al₂O₃, Fe₂O₃, TiO₂, Na₂O, K₂O, SiO₂, CaO, BaO, et SrO sont limitées à des espèces dont la présence n'est pas particulièrement souhaitée et qui sont généralement présentes à titre d'impuretés dans les matières premières.

La présence de ces espèces oxydes autres que Al₂O₃, Fe₂O₃, TiO₂, Na₂O, K₂O, SiO₂, CaO, BaO, et SrO ne modifie pas substantiellement les résultats obtenus, pourvu que leur teneur reste inférieure à 1,5%.

Classiquement, dans un produit fondu et coulé, les oxydes représentent plus de 98,5%, plus de 99%, voire sensiblement 100% de la masse du produit. Il en est de même dans un produit selon l'invention.

Tout procédé conventionnel de fabrication de produits fondus à base d'alumine destinés à des applications dans des fours de fusion de verre peut être mis en oeuvre, pourvu que la composition de la charge de départ permette d'obtenir des produits présentant une composition conforme à celle d'un produit selon l'invention.

En particulier, un produit selon l'invention peut être fabriqué suivant les étapes a) à c) décrites ci-dessus.

A l'étape a), les matières premières sont déterminées de manière à garantir une composition, dans le produit fini, conforme à l'invention.

A l'étape b), la fusion est de préférence réalisée grâce à l'action combinée d'un arc électrique assez long, ne produisant pas de réduction, et d'un brassage favorisant la réoxydation des produits.

Pour minimiser la formation de nodules d'aspect métallique et éviter la formation de fentes ou fendillements dans le produit final, il est préférable d'opérer la fusion dans des conditions oxydantes.

Préférentiellement, on utilise le procédé de fusion à l'arc long décrit dans le brevet français n° 1 208 577 et ses additions n° 75893 et 82310.

Ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain en fusion et en brassant ledit bain, soit par l'action de l'arc lui-même, soit en faisant barboter dans le bain un gaz oxydant (air ou oxygène, par exemple) ou encore en ajoutant au bain des substances dégageant de l'oxygène telles que des peroxydes.

A l'étape c), le bain de matière en fusion est de préférence coulé dans un moule adapté pour la fabrication d'un bloc. Le refroidissement est de préférence effectué à la vitesse d'environ 10°C par heure.

Tout procédé conventionnel de fabrication de produits fondus alumineux destinés à des applications dans des fours de fusion de verre peut être mis en oeuvre, pourvu que la composition de la charge de départ permette d'obtenir des produits présentant une composition conforme à celle d'un produit selon l'invention.

Un produit selon l'invention peut constituer tout ou partie d'un bloc.

En particulier, il peut ne constituer qu'une région (par exemple une couche superficielle d'une épaisseur inférieure à 50 mm, inférieure à 40 mm, inférieure à 30 mm, par exemple d'environ 20 millimètres), notamment une région qui est exposée aux rayonnements des flammes.

La forme du bloc n'est pas limitative.

Le bloc peut présenter au moins une dimension (épaisseur, longueur, ou largeur) d'au moins 150 mm, de préférence d'au moins 200 mm, voire d'au moins 400 mm, voire d'au moins 600 mm, voire d'au moins 800 mm ou même d'au moins 1000 mm, voire encore d'au moins 1600 mm.

Dans un mode de réalisation avantageux, l'épaisseur, la longueur et la largeur du bloc sont d'au moins 150 mm, voire d'au moins 200 mm, voire d'au moins 300 mm, voire d'au moins 400 mm.

De préférence, le bloc fait partie ou constitue la superstructure (voûte) d'un four, en particulier d'un four de fusion de verre.

### Exemples

Les exemples non limitatifs suivants sont donnés dans le but d'illustrer l'invention.

Dans ces exemples, on a employé les matières premières suivantes :
- l'alumine de type AC44 vendue par la société Pechiney et contenant en moyenne 99,4% d'Al₂O₃,
- le carbonate de sodium contenant 58,5% de Na₂O,
- l'oxyde de fer de pureté supérieure à 99%,
- de l'oxyde de titane (rutile) de pureté supérieure à 99%.

Les produits ont été préparés selon le procédé classique de fusion en four à arc, puis coulage pour obtenir des blocs de format 200x200x200 mm³.

L'analyse chimique des produits obtenus est donnée dans le tableau 1 ; il s'agit d'une analyse chimique moyenne, donnée en pourcentage en masse. Les impuretés constituent le complément à 100%.

### Evaluation de l'émissivité

Le dispositif utilise deux spectromètres infrarouges à transformée de Fourier fabriqués par Bruker (Vertex 80v et Vertex 70) permettant d'effectuer des mesures d'émission dans la gamme spectrale allant de 1000 à 16000 cm⁻¹.

Les échantillons présentent une épaisseur d'environ 4 mm et le diamètre typique de la zone analysée sur l'échantillon est de 2 mm. Le chauffage des échantillons est assuré par un Laser CO₂ (Diamond K500, Coherent InC.). Le faisceau suit un trajet passant par une séparatrice et un jeu de miroirs permettant d'effectuer un chauffage identique des deux faces de l'échantillon. On effectue des mesures simultanées par les deux spectromètres des flux émis par l'échantillon et par le corps noir (four Pyrox PY8, possédant une cavité cylindrique en chromite de lanthane LaCrO₃) percée d'un orifice latéral), ce dernier ayant une émissivité égale à 1. Les spectromètres infrarouges sont aussi utilisés comme des pyromètres pour la mesure de la température de l'échantillon. La méthode utilisée est celle du point de Christiansen.

Le tableau 1 donne la valeur Em : moyenne des émissivités mesurées à 1600°C, entre 4000 et 14000 cm⁻¹. Em est considérée comme significativement améliorée lorsque la valeur est 2 fois ou plus supérieure à la valeur obtenue pour le produit de référence (exemple 1).

Le complément à 100% est constitué d'impuretés.

**Tableau 1**

| N° | Al₂O₃ | Na₂O | SiO₂ | Fe₂O₃ | TiO₂ | Em |
|---|---|---|---|---|---|---|
| 1 | 95,0 | 3,5 | 0,7 | <0,1 | <0,01 | 0,18 |
| 2 | 95,0 | 3,4 | 0,5 | 0,1 | <0,01 | 0,3 |
| 3 | 94,8 | 3,4 | 0,6 | 0,3 | <0,01 | 0,35 |
| 4 | 95,0 | 3,5 | 0,5 | 0,8 | <0,01 | 0,55 |
| 5 | 94,0 | 3,4 | 0,7 | 1,4 | <0,01 | 0,6 |
| 6 | 92,0 | 3,3 | 0,7 | 2,6 | <0,01 | 0,82 |
| 7 | 91,6 | 3,8 | 0,8 | 2,2 | 1,6 | 0,7 |
| 8 | 91,9 | 3,9 | 0,7 | 1,6 | 1,9 | 0,68 |
| 9 | 91,0 | 3,2 | 0,7 | 0,9 | 3,5 | 0,75 |
| 10 | 88,0 | 1,7 | 0,6 | 0,5 | 8,9 | 0,84 |
| 11 | 93,3 | 3,7 | 0,6 | 0,0 | 1,8 | 0,45 |
| 12 | 92,4 | 3,3 | 0,6 | 0,1 | 3,4 | 0,57 |
| 13 | 88,0 | 2,1 | 0,6 | 0,1 | 8,4 | 0,7 |

Les exemples de l'invention montrent, en comparaison avec l'exemple 1 de référence, que l'émissivité moyenne, dans le domaine des longueurs d'ondes comprises entre 4000 et 14000 cm⁻¹, peut être améliorée grâce à la présence de plus de 0,6% d'oxyde de fer et/ou de 1,5% d'oxyde de titane.

Bien entendu, la présente invention n'est pas limitée aux modes de réalisation décrits fournis à titre d'exemples illustratifs et non limitatifs.

En particulier, les produits selon l'invention ne se limitent pas à des formes ou de dimensions particulières, ni à l'application à des fours de verrerie.

## Revendications

1. Produit réfractaire fondu ayant la composition chimique moyenne suivante, en pourcentages en masse sur la base des oxydes et pour un total de 100% :
Al₂O₃ : complément à 100% ;
Fe₂O₃: 0,6% - 5,0% et/ou TiO₂: 1,5% - 10,0%;
pourvu que Fe₂O₃ + TiO₂ ≤ 10,0% ;
Na₂O+K₂O : 1,0% - 8,0% ;
SiO₂: 0,2% - 2,0% ;
CaO+BaO+SrO : ≤ 0,5% ;
espèces oxydes autres que Al₂O₃, Fe₂O₃, TiO₂, Na₂O, K₂O, SiO₂, CaO, BaO et SrO: ≤ 1,5%.

2. Produit selon la revendication précédente, dans lequel la teneur en Fe₂O₃ + TiO₂ est inférieure ou égale à 8,0%.

3. Produit selon l'une quelconque des revendications précédentes, dans lequel la teneur en Fe₂O₃ est inférieure ou égale à 3,0%.

4. Produit selon l'une quelconque des revendications précédentes, dans lequel la teneur en TiO₂ est inférieure ou égale à 6,0%.

5. Produit selon l'une quelconque des revendications précédentes, dans lequel la teneur en TiO₂ est comprise entre 2,5% - 5,0% et la teneur en Fe₂O₃ + TiO₂ est comprise entre 2,5% - 6,0%.

6. Produit selon l'une quelconque des revendications précédentes, dans lequel la teneur en Fe₂O₃ est comprise entre 1,0% - 3,0% et la teneur en TiO₂ est comprise entre 2,0% - 4,0%.

7. Produit selon l'une quelconque des revendications précédentes, dans lequel la teneur en SiO₂ est inférieure ou égale à 1,0%.

8. Produit selon l'une quelconque des revendications précédentes, dans lequel la teneur en Na₂O+K₂O est inférieure ou égale à 7,0%.

9. Produit selon l'une quelconque des revendications précédentes, se présentant sous la forme d'un bloc présentant une masse de plus de 10 kg.

10. Four de fusion de verre, comportant un produit selon l'une quelconque des revendications précédentes.

11. Four selon la revendication immédiatement précédente, dans lequel ledit produit est disposé en superstructure.

## Patentansprüche

1. Geschmolzenes feuerfestes Produkt mit der durchschnittlichen chemischen Zusammensetzung, in Gewichtsprozent, auf der Basis von Oxiden, und zu insgesamt 100 %:
Al₂O₃: Ergänzung auf 100 %;
Fe₂O₃: 0,6 % - 5,0 % und/oder TiO₂: 1,5 % - 10,0 %;
mit der Maßgabe, dass Fe₂O₃ + TiO₂ < 10,0 %;
Na₂O + K₂O: 1,0 % - 8,0 %;
SiO₂: 0,2 % - 2,0 %;
CaO + BaO + SrO: < 0,5 %;
andere Oxidarten als Al₂O₃, Fe₂O₃, TiO₂, Na₂O, K₂O, SiO₂, CaO, BaO und SrO: < 1,5 %.

2. Produkt nach dem vorangehenden Anspruch, wobei der Gehalt an Fe₂O₃ + TiO₂ kleiner oder gleich 8,0 % ist.

3. Produkt nach einem der vorangehenden Ansprüche, wobei der Gehalt an Fe₂O₃ kleiner oder gleich 3,0 % ist.

4. Produkt nach einem der vorangehenden Ansprüche, wobei der Gehalt an TiO₂ kleiner oder gleich 6,0 % ist.

5. Produkt nach einem der vorangehenden Ansprüche, wobei der Gehalt an TiO₂ zwischen 2,5 % - 5,0 % liegt und der Gehalt an Fe₂O₃ + TiO₂ zwischen 2,5 % - 6,0 % liegt.

6. Produkt nach einem der vorangehenden Ansprüche, wobei der Gehalt an Fe₂O₃ zwischen 1,0 % - 3,0 % liegt und der Gehalt an TiO₂ zwischen 2,0 % - 4,0 % liegt.

7. Produkt nach einem der vorangehenden Ansprüche, wobei der Gehalt an SiO₂ kleiner oder gleich 1,0 % ist.

8. Produkt nach einem der vorangehenden Ansprüche, wobei der Gehalt an Na₂O + K₂O kleiner oder gleich 7,0 % ist.

9. Produkt nach einem der vorangehenden Ansprüche, in Form eines Blocks mit einem Gewicht von mehr als 10 kg.

10. Glasschmelzofen, umfassend ein Produkt nach einem der vorangehenden Ansprüche.

11. Ofen nach dem unmittelbar vorangehenden Anspruch, wobei das Produkt in einer Superstruktur angeordnet ist.

## Claims

1. A fused refractory product having the following average chemical composition, as weight percentages on the basis of oxides and for a total of 100%:
Al₂O₃: balance to 100%;
Fe₂O₃: 0.6%-5.0% and/or TiO₂: 1.5%-10.0%;
provided that Fe₂O₃ + TiO₂ ≤ 10.0%;
Na₂O+K₂O: 1.0%-8.0%;
SiO₂: 0.2%-2.0%;
CaO+BaO+SrO: ≤ 0.5%;
oxide species other than Al₂O₃, Fe₂O₃, TiO₂, Na₂O, K₂O, SiO₂, CaO, BaO and SrO: ≤ 1.5%.

2. The product as claimed in the preceding claim, wherein the content of Fe₂O₃ + TiO₂ is less than or equal to 8.0%.

3. The product as claimed in either one of the preceding claims, wherein the content of Fe₂O₃ is less than or equal to 3.0%.

4. The product as claimed in any one of the preceding claims, wherein the content of TiO₂ is less than or equal to 6.0%.

5. The product as claimed in any one of the preceding claims, wherein the content of TiO₂ is between 2.5%-5.0% and the content of Fe₂O₃ + TiO₂ is between 2.5%-6.0%.

6. The product as claimed in any one of the preceding claims, wherein the content of Fe₂O₃ is between 1.0%-3.0% and the content of TiO₂ is between 2.0%-4.0%.

7. The product as claimed in any one of the preceding claims, wherein the content of SiO₂ is less than or equal to 1.0%.

8. The product as claimed in any one of the preceding claims, wherein the content of Na₂O+K₂O is less than or equal to 7.0%.

9. The product as claimed in any one of the preceding claims, which is in the form of a block having a weight of more than 10 kg.

10. A glass-melting furnace, comprising a product as claimed in any one of the preceding claims.

11. The furnace as claimed in the immediately preceding claim, wherein said product is arranged in a superstructure.
